(19) Europäisches Patentamt / European Patent Office / Office européen des brevets

(11) **EP 4 700 001 A1**

(12) **EUROPÄISCHE PATENTANMELDUNG**

(43) Veröffentlichungstag:
**25.02.2026   Patentblatt 2026/09**

(21) Anmeldenummer: **25197413.5**

(22) Anmeldetag: **21.08.2025**

(51) Internationale Patentklassifikation (IPC):
*C04B 33/04* (2006.01)     *C04B 33/13* (2006.01)
*C04B 33/132* (2006.01)    *C04B 33/16* (2006.01)
*C04B 33/32* (2006.01)

(52) Gemeinsame Patentklassifikation (CPC):
**C04B 33/32; C04B 33/04; C04B 33/131;**
**C04B 33/132; C04B 33/16; C04B 33/323;**
C04B 2235/3208; C04B 2235/321;
C04B 2235/3472; C04B 2235/3481;
C04B 2235/446; C04B 2235/448; C04B 2235/6021

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH LA MA MD TN**

(30) Priorität:  **22.08.2024  DE 102024002725**

(71) Anmelder: **Ceramix AG**
**90461 Nürnberg (DE)**

(72) Erfinder:
• **Müller, Melanie**
  **91126 Schwabach (DE)**
• **Schmid, Stephan**
  **92348 Berg b. Neumarkt (DE)**
• **Ullermann, Klaus**
  **91126 Schwabach (DE)**

(74) Vertreter: **Küchler, Stefan**
**Stefan T. Küchler**
**Patentanwalt**
**Färberstraße 20**
**90402 Nürnberg (DE)**

(54) **BAUPRODUKT UND VERFAHREN ZU DESSEN HERSTELLUNG**

(57)    Die Erfindung richtet sich auf ein keramisches Bauprodukt zur Herstellung einer Wand und/oder zur Verkleidung einer Gebäudehülle, bspw. in Form eines Mauersteins oder eines Fassadenelements, insbesondere eines Mauerziegels, wobei das gebrannte Bauprodukt einen TIC-Gehalt (Total Inorganic Carbon) von mehr als 0,3 Ma.-% aufweist, und durch Wasserzugabe nicht in einen plastischen Zustand des Materials überführbar ist, sowie auf ein Verfahren zur Herstellung eines derartigen Bauproduktes.

**EP 4 700 001 A1**

**Beschreibung**

Die Erfindung richtet sich auf ein keramisches Bauprodukt zur Herstellung einer Wand und/oder zur Verkleidung einer Gebäudehülle, bspw. in Form eines Mauersteins oder eines Fassadenelements, insbesondere eines Mauerziegels, sowie auf ein Verfahren zur Herstellung eines derartigen Bauproduktes.

Dabei wird das keramische Bauprodukt zunächst aus einer plastisch verformbaren Ziegelrohmasse geformt und anschließend gebrannt, wobei die Ziegelrohmasse zuvor vorzugsweise ausschließlich durch Einsatz von festen und flüssigen Bestandteilen angemischt wird. Damit ist gemeint, dass möglichst weder die angemischte Ziegelrohmasse noch die darin hinein gemischten Bestandteile zuvor einer anderen Atmosphäre ausgesetzt wurden oder werden als Luft.

Die Bemühungen um den Klimaschutz stellen Staat und Gesellschaft vor große Herausforderungen. So will Deutschland bis 2045 Klimaneutralität erreichen. Der Schwerpunkt der bisherigen Anstrengungen zielt darauf ab, Treibhausgasemissionen zu vermeiden. Die Maßnahmen zur Vermeidung von Treibhausgasen umfassen primär die Steigerung der Effizienz bei der Gebäudeheizung und -dämmung sowie die Umstellung auf erneuerbare bzw. synthetische Energieträger.

Nicht berücksichtigt sind dabei $CO_2$-Emissionen, welche beim Herstellungsprozess von Bauprodukten als Prozessemissionen anfallen. Die Prozessemissionen bei der Herstellung von Mauerziegeln werden dabei nach TOC (Total Organic Carbon) als organische $CO_2$-Emissionen und TIC (Total Inorganic Carbon) als anorganische $CO_2$-Emissionen unterschieden.

Idealerweise ist ein Ziegel ein poröser, rechteckiger Block aus Ton, der durch Brennen gehärtet wird. Der Hauptbestandteil von Tonziegeln ist ein Tonmineral wie bspw. Kaolinit, also $Al_4[(OH)_8|Si_4O_{10}]$ oder $Al_2O_3 \cdot 2SiO_2 \cdot 2H_2O$.

Andererseits kommen Tonminerale selten in reiner Form vor, sondern sind häufig mit anderen chemischen Verbindungen vermischt wie z.B. mit Eisenoxidhydraten, die dem Ton dann eine rötliche Färbung verleihen und das typische Erscheinungsbild gebrannter Ziegel prägen.

Allerdings ist der für solche Ziegelsteine typische ziegelrote Farbton auch ein Resultat der beim Brennen gewählten Atmosphäre. Denn nur in einer oxidierenden Atmosphäre, wo also der Sauerstoffgehalt mindestens bei 16 Vol.-% liegt, wandelt sich das üblicherweise schwarze Eisenoxid FeO in das ziegelrote $Fe_2O_3$ um. Um demnach die typischerweise als ziegelrot bezeichnete Färbung von Dach- oder Mauerziegeln zu erhalten, ist eine oxidierende Atmosphäre beim Brennvorgang wichtig.

Darüber hinaus treten Tonmineralien häufig auch in Form von Tonstein auf, einem Sedimentgestein mit einer Korngröße von weniger als 0,002 mm, das neben Tonmineralen wie z. B. Montmorillonit, Illit und/oder Smektit weitere Bestandteile wie Quarz, Feldspat und/oder Karbonaten aufweist, wobei für die Ziegelherstellung vor allem Tonsteine aus quellfähigen Tonmineralen wie beispielsweise Montmorillonit bevorzugt werden.

Eine andere, in der Natur ebenso häufige Form von Tonmineralien ist der sogenannte Mergel, d.h., ein kalkhaltiger Ton, also ein Gemenge aus wenigstens einem Tonmineral und einem hohen Karbonat-Anteil. Karbonate sind die anorganischen Salze der anorganischen Kohlensäure $H_2CO_3$. Zumeist besteht Mergel u.a. aus Tonmineralien sowie aus den Karbonaten Calcit $CaCO_3$ und/oder Dolomit $CaMg(CO_3)_2$. Außerdem können noch Quarz, Glimmer, Pyrit und/oder Gips enthalten sein.

Man erkennt, dass weitgehend unabhängig von dem Ausgangsrohstoff häufig wenigstens ein Tonmineral wie Kaolinit, Montmorillonit, Illit und/oder Smektit enthalten ist, ferner oftmals wenigstens ein Karbonat wie Calcit und/oder Dolomit, sowie Quarz. Letzterer wird häufig auch zur Abmagerung zugesetzt.

Insbesondere sind die Erdalkalikarbonate Calcit $CaCO_3$ und Dolomit $CaMg(CO_3)_2$ häufige Bestandteile von Ziegelrohstoffen. Tone, die vorwiegend für die Hochlochziegelherstellung verwendet werden, sind oft mergelig und enthalten daher bis zu 30 Ma.-% Karbonate. Solange dieser Kalk in fein verteilter Form vorliegt, ist er nicht unerwünscht, da er durch den Ziegelbrand entsäuert und chemisch eingebunden wird. Durch eine solche Reaktion erhält der Ziegel Mikroporen, welche die Wärmeleitfähigkeit der Ziegel senken.

Mergel enthält also neben Tonmineralien in Form von silikatischen Bestandteilen kleiner Korngröße auch Kalk. Bei einem hohen Anteil an Tonmineralien spricht man von Tonmergel, bei einem hohem Kalkgehalt dagegen von Kalkmergel. Grundsätzlich können folgende Sorten unterschieden werden, wobei der Begriff Kalk als kohlensauerer Kalk oder Kalziumkarbonat zu verstehen ist:

a) hochprozentiger Ton (100 Ma.-% Tonmineralien, 0 Ma.-% Kalk)
b) mergeliger Ton (max. 95 Ma.-% Tonmineralien, bis zu 5 Ma.-% Kalk)
c) Mergelton (85 bis 95 Ma.-% Tonmineralien, 5 bis 15 Ma.-% Kalk)
d) Tonmergel (75 bis 85 Ma.-% Tonmineralien, 15 bis 25 Ma.-% Kalk)
e) Mergel (65 bis 75 Ma.-% Tonmineralien, 25 bis 35 Ma.-% Kalk)
f) Kalkmergel (35 bis 65 Ma.-% Tonmineralien, 35 bis 65 Ma.-% Kalk)
g) Mergelkalk (25 bis 35 Ma.-% Tonmineralien, 65 bis 75 Ma.-% Kalk)
h) mergeliger Kalk (15 bis 25 Ma.-% Tonmineralien, 75 bis 85 Ma.-% Kalk)

i) Hochprozentiger Kalkstein (5 bis 15 Ma.-% Tonmineralien, 85 bis 95 Ma.-% Kalk).

Von diesen verschiedenen Sorten werden für die Ziegelherstellung vor allem die Substanzen mergeliger Ton, Mergelton, Tonmergel oder Mergel verwendet, so dass der Kalk-Anteil zwischen 5 und 35 Ma.-% liegt.

Das Brennen von Ziegeln findet im Stand der Technik zumeist in sog. Tunnelöfen statt, wo die Ziegelrohlinge auf Wagen langsam vorantransportiert werden und dabei verschiedene Zonen durchlaufen.

In der zuerst durchlaufenen Aufheizzone werden die Ziegelrohlinge allmählich vorgeheizt, um dem getrockneten Ton die Restfeuchtigkeit zu entziehen. Dabei kann kristallin gebundenes Wasser in Form von Dampf entweichen.

In einer folgenden Zone, der Brennzone, erfahren die aufgeheizten Ziegelrohlinge einen signifikanten Umwandlungsprozess, wobei benachbarte Ton-Partikel durch Sintern, d.h. oberflächliches Anschmelzen, miteinander verbunden werden. Der Prozess des Sinterns kann als ein oberflächliches Weichwerden der Tonmasse betrachtet werden, wobei sich der Ton in einer Übergangsphase zwischen fest und flüssig befindet. Erst das oberflächliche Erweichen der zunächst festen Partikel der plastischen Ziegelrohmasse erlaubt die Sinter-Transformation dieser formbaren Ziegelrohmasse zu dem schlussendlich gebrannten und damit harten Keramikziegel.

Die für einen solchen Sintervorgang benötigte Temperatur wird als Sinterungspunkt bezeichnet und liegt (zumeist deutlich) unterhalb des Schmelzpunktes des betreffenden Materials. Je höher der Sinterungspunkt des betreffenden Ton-Materials liegt, desto höher muss die Temperatur beim Brennen gewählt werden. Falls der Sinterungspunkt und der Schmelzpunkt des verwendeten Ziegelrohmaterials sehr dicht beieinander liegen, wie dies bspw. bei einem kalkreichen Ton der Fall ist, muss zudem die Brenntemperatur in der Brennzone möglichst genau eingehalten werden, um ein Erweichen und Verformen der Ziegelrohlinge zu vermeiden. Aus diesem Grund sollte der Sinterungspunkt möglichst tief liegen.

Andererseits steigt der Sinterungspunkt beim Brennen mit einem zunehmenden Anteil an Quarz im Ziegelrohmaterial an. Bestimmte Beimischungen zu dem Ziegelrohmaterial, sog. Flussmittel, sind in der Lage, den Sinterungspunkt zu senken.

In der Brennzone verweilen die Ziegelrohlinge für eine gewisse Zeit, während der sich der gesinterte Ton endgültig stabilisiert.

Am Schluss durchlaufen die in der Brennzone gebrannten Ziegel noch eine Abkühlzone, wo die Ziegel allmählich abkühlen können, ohne dabei einem abrupten Temperatursturz ausgesetzt zu werden, da ansonsten Risse in den Ziegeln auftreten könnten. Erst nach einer angemessenen Verweilzeit in der Abkühlzone, bspw. wenn die Temperatur der Ziegel unterhalb von 100° C liegt, verlassen die fertigen Ziegel den Tunnelofen.

Während dem solchermaßen ablaufenden Brennprozess tritt aber nicht nur das - erwünschte - Sintern der Ton-Partikel auf, sondern darüber hinaus findet dabei auch eine Zersetzung des Karbonat-Anteils statt. Die $CO_2$-Emissionen aus TIC entstehen bei der Ziegelproduktion insbesondere infolge der Karbonat-Zersetzung des enthaltenen Calcits und Dolomits:

$$\text{Calcit:} \quad CaCO_3 \rightarrow CaO + CO_2$$
$$\text{Dolomit:} \quad CaMg(CO_3)_2 \rightarrow CaO + MgO + 2\,CO_2$$

Diese Karbonat-Zersetzung ist eine endotherme Reaktion, welche durch die Temperatur und Zusammensetzung der umgebenden Atmosphäre und dem Partialdruck des $CO_2$ beeinflusst wird. Für den endothermen Prozess der Zersetzung des Calciumcarbonats wird beispielsweise 177,9 kJ/mol benötigt. Dies sind umgerechnet 494,2 $kWh/t_{CaCO3}$. Der benötigte Energieeinsatz am Ofen ist somit bis zu 25 % auf die Karbonat-Zersetzung zurückzuführen.

Üblicherweise werden Mauerziegel bei Temperaturen in einer Größenordnung von etwa 1.000 °C gebrannt, was eine solche Karbonat-Zersetzung ermöglicht. Darüber hinaus sind die Temperaturen beim Brand des keramischen Scherbens so gewählt, dass nicht nur die Karbonat-Zersetzung stattfinden kann, sondern vielmehr ist es auch gewollt, dass sich aus den freien Metalloxiden CaO und MgO Silikate bilden können. Freie Metalloxide können aufgrund einer Hydroxidbildung und der damit verbundenen Volumenzunahme zur Zerstörung des keramischen Scherbens führen.

Bei der Herstellung von Ziegeln werden Karbonate durch die Rohstoffströme des Tonrohstoffs einerseits und eines ggf. vorhandenen Papierfangstoffs (als Porosierungsmittel und/oder als Energieträger) andererseits zugeführt. Der Karbonat-Anteil in den Rohstoffmischungen der Ziegelindustrie kann hierbei bis zu etwa 30 Ma.-% betragen.

Die organischen Bestandteile der Rohstoffströme verbrennen während des Brandes der Ziegel in der Regel zum Großteil bereits bei Temperaturen unterhalb von 600 °C. Hierbei wird $CO_2$ aus fossilen und biogenen Energieträgern freigesetzt.

Das dabei jeweils entstehende - aus anorganischen (TIC) oder organischen (TOC) Quellen stammende - Kohlendioxid entweicht normalerweise in die Atmosphäre.

Aus den geschilderten Nachteilen des Standes der Technik resultiert das die vorliegende Erfindung initiierende Problem, die Freisetzung von $CO_2$ bei der Ziegelherstellung so weit als möglich zu verringern.

Die Lösung dieses Problems gelingt im Rahmen eines erfindungsgemäßen Bauproduktes dadurch, dass das gebrannte keramische Bauprodukt aus einer zunächst plastischen Masse geformt, getrocknet und sodann derart gebrannt wird, die vorzugsweise unter ausschließlichem Einsatz von festen und flüssigen Bestandteilen hergestellt ist, wobei

a) einen TIC-Gehalt (Total Inorganic Carbon) von mehr als 0,3 Ma.-% aufweist, und
b) durch Wasserzugabe nicht in einen plastischen Zustand des Materials überführbar ist.

Durch den bevorzugten ausschließlichen Einsatz von festen und flüssigen Bestandteilen wird auf eine Verwendung bzw. Beimengung von speziellen gasförmigen Bestandteilen außer Luft, Druckluft und/oder erhitzter Luft vollständig verzichtet, denn von Luft mit ihrer typischen Zusammensetzung abweichende Gase lassen sich weniger leicht handhaben als Feststoffe und Flüssigkeiten. Insbesondere erfordert die Erfindung keine Begasung von Bestandteilen mit speziellen, von Luft abweichenden Gasen als Vorbereitung auf die Herstellung einer plastisch verformbaren Masse, woraus dann ggf. Formlinge angefertigt und schließlich gebrannt werden. Vielmehr soll weder die angemischte Ziegelrohmasse noch die darin hinein gemischten Bestandteile zuvor einer anderen Atmosphäre ausgesetzt werden als Luft. Im Brennofen wird sodann die Luftzufuhr wie üblich gesteuert.

Als einzigem Einsatz von Gasen kann der Brennofen mit einem Gas beheizt werden, bspw. mittels Erdgas, Holzgas oder einem anderen Biogas wie Biomethan, u.a. auch Klärgas, Faulgas oder Deponiegas. Die Verwendung von Biogas aus nachwachsenden Rohstoffen verbessert die Kohlendioxidbilanz weiter.

In einem solchen Zustand ist der Karbonat-Anteil innerhalb des erfindungsgemäßen Bauproduktes noch ausreichend, und es hat keine nennenswerte Umwandlung der freien Metalloxide CaO und MgO in Silikate stattgefunden, die potentiell gefährlich für die strukturelle Stabilität des keramischen Scherbens sein könnte. Mit dieser verringerten Umsetzung einher geht eine verringerte Freisetzung von $CO_2$ bei der Ziegelherstellung.

Das Verfahren zur Anfertigung eines erfindungsgemäßen keramischen Bauproduktes für die Herstellung einer Wand und/oder zur Verkleidung einer Gebäudehülle, bspw. in Form eines Mauersteins oder eines Fassadenelements, insbesondere eines Mauerziegels, zeichnet sich dadurch aus, dass das keramische Bauprodukt aus einer zunächst plastischen Masse geformt, getrocknet und sodann derart gebrannt wird, die vorzugsweise unter ausschließlicher Verwendung von festen und flüssigen Bestandteilen hergestellt ist, wobei dass das gebrannte Bauprodukt

a) einen TIC-Gehalt (Total Inorganic Carbon) von mehr als 0,3 Ma.-% aufweist, und
b) durch Wasserzugabe nicht in einen plastischen Zustand des Materials überführbar ist.

Es ist ein völlig neuartiger Ansatz, den Herstellungsprozess für ein keramisches Bauprodukt aus bevorzugt nur festen und flüssigen Bestandteilen derart zu steuern, dass während des Sinterns der Tonmineral-Partikel die Umwandlung der freien Metalloxide CaO und MgO in Silikate begrenzt oder gar unterbunden wird und demzufolge das gebrannte und gebrauchsfertige keramische Bauprodukt einen deutlich messbaren TIC-Gehalt behält, wodurch die Freisetzung von $CO_2$ bei der Ziegelherstellung verringert wird.

Der jeweilige TIC-Gehalt kann dabei z.B. aus dem gesamten Kohlenstoffanteil (TC-Wert, von "Total Carbon") und dem gesamten organischen Kohlenstoffanteil (TOC-Wert, von "Total Organic Carbon") nach dem Differenzprinzip ermittelt werden gemäß folgender Formel:

$$TIC = TC - TOC.$$

Der gesamte Kohlenstoffanteil TC und der gesamte organische Kohlenstoffanteil TOC wird dazu vorzugsweise nach den folgenden Normen ermittelt, wobei der relevante Kohlenstoffanteil jeweils auf die Trockenmasse bezogen ist. Die Ermittlung der Trockenmasse erfolgt - wie die jeweilige Kohlenstoff-Ermittlung selbst - ebenfalls nach den jeweils einschlägigen Normen:

TC:       DIN EN 13137; DIN EN 15936:2012-11, DIN EN 15407:2011-05, DIN EN ISO 21663:2021-03;
TOC:      DIN EN 15936:2012-11; DIN EN 13137; ISO 10694:1995-03.

Für die Ermittlung des gesamten organischen Kohlenstoffs biogenen Ursprungs gibt es weiterhin die folgende DIN-Norm:

$TOC_{biogen}$:       DIN EN ISO 21644:2021-7.

Während der TOC-Wert auch bspw. in Kunststoffen gebundenen Kohlenstoff enthält, berücksichtigt der $TOC_{biogen}$-Wert nur pflanzliche Stoffe wie insbesondere Zellulose, Hemizellulose, Lignin, od. dgl.

Zur Ermittlung der auf die keramische Matrix bezogenen Werte ist ein ggf. in einer oder mehreren Lochungen eines Bauproduktes vorhandenes Füllmaterial zunächst von der keramischen Matrix zu trennen, was insbesondere durch Entnahme der Füllung aus den Hohlräumen der Lochung(en) erfolgen kann.

Es hat sich als günstig erwiesen, dass der Ziegelrohling für das Bauprodukt aus einer plastisch verformbaren Ziegelrohmasse geformt ist, der mergeligen Ton, Mergelton, Tonmergel und/oder Mergel enthalten kann. Dieser Ziegelrohmasse wird sodann zur Schaffung einer plastischen, formbaren Substanz Wasser hinzugefügt, bis die Substanz die gewünschte Plastizität aufweist.

Eine Möglichkeit der Abmagerung ohne Verwendung von Quarz besteht darin, Ziegelmehl oder Ziegelsand zu verwenden. Allerdings stammt das in einer Ziegelei der Ziegelrohmasse beigemengte Ziegelmehl nicht von recycelten keramischen Waren, sondern ist ein Abfallprodukt der Ziegelei selbst. Denn moderne Mauerziegel sollen mit einer möglichst dünnen Mörtelschicht vermauerbar sein, wofür eine sehr glatte bzw. ebene Ober- und Unterseite erorderlich sind. Solche planen, insbesondere zueinander parallelen Ober- und Unterseiten werden durch Schmirgeln der Ober- und Unterseiten von gebrannten und vorzugsweise abgekühlten Ziegelsteinen in der Ziegelei erhalten, wobei typischerweise etwa 1 Vol.- oder Gew.- % der reinen Ziegelmatrix in Ziegelmehl umgewandelt werden. Üblicherweise wird dieses Ziegelmehl sodann der Ziegelrohmasse für eine nachfolgende Produktions-Charge beigemengt. Daher liegt der Anteil von Ziegeleiabfällen, insbesondere von Ziegelmehl aus der Ziegelproduktion, in der Größenordnung von ca. 1 Gew.-%, maximal bei etwa 3 Gew.-%, zumeist unterhalb von 5 Gew.-%, in jedem Falle unterhalb von 7 Gew.-%.

Ferner enthält bei Ausführung des erfindungsgemäßen Verfahrens das eingesetzte Ziegelmehl die selben Rohstoffe wie das fertige Bauprodukt in Form des gebrannten und ggf. ober- und unterseitig geschmirgelten bzw. geglätteten Ziegelsteins. Dieses Ziegelmehl wird daher ohne weitere Ver- oder Bearbeitung unmittelbar in die Ziegelrohmasse einer folgenden Brenn-Charge beigemengt.

Da bei der Ausführung des erfindungsgemäßen Verfahrens der in der noch plastisch verformbaren Ziegelrohmasse enthaltene Carbonat-Anteil beim Brennen nicht zersetzt wird, liegt der Carbonatanteil des ggf. beigemengten Ziegelmehls bei 10 Gew.-% oder mehr, vorzugsweise bei 20 Gew.-% oder mehr, insbesondere bei 30 Gew.-% oder mehr. Infolge dieses hohen ursprünglichen Carbonat-Anteils ist es nicht möglich, diesen Carbonat-Anteil vor der Beimischung an das Rohmaterial für die nächstfolgende Charge substantiell zu erhöhen.

Stücke von recycelten keramischen Waren - also bspw. bei dem Abriss eines Hauses anfallenden Alt-Ziegeln - sind üblicherweise gar nicht enthalten, weder in Granulatform noch in einer sonstigen Partikelform wie Sand oder Mehl, so dass bei dem erfindungsgemäßen Produkt und Verfahren der Anteil beigemengter Stücke von recycelten keramischen Waren in der ungebrannten Ziegelrohmasse normalerweise bei 0 Gew.-% liegt, typischerweise bei weniger als 1 Gew.-%, beispielsweise bei weniger als 2 Gew.-%, vorzugsweise bei weniger als 3 Gew.-%, insbesondere bei weniger als 4 Gew.-%.

Die Formgebung für die erfindungsgemäßen Bauprodukte, insbesondere Mauerziegel, aus der noch formbaren Rohmasse erfolgt durch Strangpressen, bevorzugt mit Hilfe eines vorzugsweise kontinuierlich arbeitenden Extruders. Solche kontinuierlich arbeitende Extruder können mittels einer Förderschnecke realisiert werden, welche das noch plastische Rohmaterial kontinuierlich heranfördert und verdichtet, bspw. auf einen Arbeitsdruck in der noch formbaren Ziegelmasse von 70 bis 350 atm, bevorzugt auf einen Arbeitsdruck in der noch formbaren Ziegelmasse von 70 bis 250 atm, insbesondere auf einen Arbeitsdruck in der noch formbaren Ziegelmasse von 70 bis 150 atm, bevor diese den Extruder an einem Mundstück verlässt.

Anschließend werden aus dem solchermaßen endlos erzeugten Strang die einzelnen Ziegelsteine abgeschnitten. Dieser Vorgang ist herstellungstechnisch günstiger als das chargenweise Arbeiten mit Kolben-Extrudern, wo ein hin- und her gehender Kolben innerhalb eines Zylinders jeweils nur eine begrenzte Menge der Ziegelrohmasse auspressen kann.

An die Formgebung schließt sich sodann - ggf. nach einer Trocknungsphase - der Brennvorgang an. Dieser findet erfindungsgemäß statt bei einer reduzierten Temperatur von bspw. 700 °C bis 800 °C, beispielsweise bei einer Temperatur von 700 °C bis 750 °C.

Während des Brennvorgangs herrscht innerhalb des Brennofens idealerweise nur atmosphärischer Druck, also bspw. 1 atm. Der maximale Ofendruck darf dabei zwar auch leicht oberhalb des atmosphärischen Drucks liegen, beispielsweise bei bis zu 1,25 atm, aber normalerweise nicht oberhalb von 1,5 atm, vorzugsweise unterhalb von 1,75 atm, insbesondere bei nicht mehr als 2 atm.

Der Kohlendioxidpartialdruck in dem Brennofen liegt während des Brennvorgangs typischerweise bei etwa 0,4 mbar, beispielsweise unterhalb von 1 mbar, vorzugsweise unterhalb von 2 mbar, insbesondere unterhalb von 5 mbar.

Andererseits sollte der Anteil von Sauerstoff in der Atmosphäre des Brennofens bei wenigstens 15 Vol.-% liegen, beispielsweise bei wenigstens 16 Vol.-%, vorzugsweise bei wenigstens 18 Vol.-%, insbesondere bei wenigstens 20 Vol.-%. Dass ständige Beibehalten eines derartigen Mindest-Volumen-Anteils gewährleistet, dass das Brennen nicht in einer reduzierenden Atmosphäre durchgeführt wird, sondern in einer oxidierenden Atmosphäre. Infolgedessen kann der gesamte FeO-Gehalt innerhalb der Ziegelrohmasse in $Fe_2O_3$ umgewandelt werden, welches dem fertigen Bauprodukt die typische ziegelrote Färbung verleiht, während bei einem Brand unter reduzierender Atmosphäre einerseits das schwarze FeO vorherrscht und außerdem eventuelle Flammen erlöschen, so dass sich Rauch und/oder Ruß in den Poren des fertigen Bauproduktes niederschlagen und die solchermaßen hergestellten Bauprodukte eine eher graue bis schwarze Farbe aufweisen.

Ein erfindungsgemäß gebrannter Ziegel hat daher eine typische rote bis hellrote Farbe, bspw. RAL 3000, RAL 3001, RAL 3002, RAL 3003, RAL 3004, RAL 3009, RAL 3011, RAL 3013, RAL 3016, RAL 3018, RAL 3020, RAL 3027, RAL 3031 oder RAL 3033.

Bei einem hohen Kalkanteil in der Ziegelrohmasse kann das erfindungsgemäße Bauprodukt nach dem Brand sogar noch hellere Farben aufweisen wie bspw. RAL 3012, RAL 3014, RAL 3015, RAL 3017, RAL 3022, RAL 3024, RAL 3026 oder RAL 3028.

Dunklere Farben wie bspw. RAL 3005, RAL 3007 oder RAL 3032 sind dagegen eher auf einen reduzierenden Brand zurückzuführen, wie er bspw. bei einem zu hohen Kohlendioxidpartialdruck im Brennofen auftritt, insbesondere als Folge einer künstlichen Erhöhung desselben.

Zwar wird bei der Herstellung eines erfindungsgemäßen Bauproduktes bzw. Mauerziegels keine positive Kohlenstoffdioxidbilanz erreicht, da für das Brennen des Ziegels nach wie vor fossile Brennstoffe wie Erdgas oder Erdöl verbrannt werden müssen, aber die erreichbare Kohlenstoffdioxidbilanz ist weniger negativ als bei herkömmlichen Verfahren, wo auch große Mengen von in der Ziegelrohmasse enthaltenen Carbonaten aufgespalten werden, wobei zusätzliches Kohlendioxid entweicht.

Stattdessen wird eine nach dem erfindungsgemäßen Verfahren arbeitende Ziegelei davon befreit, Stücke von recycelten keramischen Waren verwenden zu müssen, welche nur mit einem hohen Aufwand aus Schutt von abgerissenen Häusern od. dgl. gewonnen werden können. Allenfalls die Verwendung von carbonatreichem Ziegelmehl aus der eigenen Ziegelherstellung bzw. von dem nach dem Brennen durchgeführten Planschmirgeln der Ober- oder Unterseiten von halbfertigen Bauprodukten kann eingesetzt werden, falls vorhanden, was jedoch verfahrenstechnisch nicht erforderlich ist.

Der erfindungsgemäße TIC-Gehalt in den fertigen Bauprodukten ist vielmehr alleine das Ergebnis der Reduzierung der Brenntemperatur unter Beibehaltung eines oxidierenden Brandes.

Um den Sinterpunkt weiter zu senken, kann andererseits die für die Formung des Ziegelrohlings verwendete, plastisch verformbare Ziegelrohmasse wenigstens einen Schmelzphasenbildner aufweisen, bspw. in einem Anteil von 1 Ma.-% oder mehr, vorzugsweise in einem Anteil von 3 Ma.-% oder mehr, insbesondere in einem Anteil von 5 Ma.-% oder mehr, oder sogar in einem Anteil von 8 Ma.-% oder mehr, jeweils bezogen auf die Masse des plastisch verformbaren Ziegelrohmaterials. Als Schmelzphasenbildner werden Tonminerale wie Illit und/oder Serizit empfohlen, und/oder eisenreicher Chlorit sowie Feldspat, Glimmer oder Talk. In dem ersteren Fall von Illit und Serizit ist der Schmelzphasenbildner als Tonmineral zu dem Hauptbestandteil des Ziegelrohmaterials zu zählen.

Andererseits sollte der Anteil des wenigstens einen Schmelzphasenbildners höchstens 35 Ma.-% oder weniger betragen, vorzugsweise nur 30 Ma.-% oder weniger, insbesondere nur 25 Ma.-% oder weniger, ggf. auch nur 20 Ma.-% oder weniger, jeweils bezogen auf die Masse des plastisch verformbaren Ziegelrohmaterials. Bei einem höheren Anteil besteht die Gefahr, dass Sinter- und Schmelzpunkt relativ nahe beieinander liegen, was verfahrenstechnisch schwer zu beherrschen ist.

Um die Porosität des gebrauchsfertigen Ziegels bei Bedarf zu steigern, sieht die Erfindung weiterhin vor, dass das plastisch verformbare Ziegelrohmaterial wenigstens ein Porosierungsmittel in Form eines ausbrennbaren Stoffes aufweist, bspw. in einem Anteil von 0,2 Ma.-% oder mehr, vorzugsweise in einem Anteil von 0,4 Ma.-% oder mehr, insbesondere in einem Anteil von 0,6 Ma.-% oder mehr, bezogen auf die Ziegelrohmasse. Insbesondere Porosierungsmittel in Form von ausbrennbaren Stoffen wie Papierfangstoff od. dgl. werden beim Brennvorgang zersetzt und hinterlassen dabei Poren innerhalb der Ziegelmatrix, welche sich günstig auf das Wärmeübertragungsverhalten auswirken. Gleichzeitig wird während dieses Ausbrennens auch Energie direkt innerhalb des Ziegelrohlings freigesetzt, wodurch sich einerseits eine gleichmäßige Erwärmung des gesamten Ziegelrohlings ergibt und zwischen der Temperatur an der Oberfläche des Ziegelrohlings, welche der Temperatur innerhalb der Brennzone entspricht, und der gewünschten Sintertemperatur im Inneren des Ziegelrohlings kein nennenswertes Temperaturgefälle erforderlich ist.

Andererseits sollte der Anteil eines ausbrennbaren Porosierungsmittels auch nicht zu hoch sein, weil durch dessen Zersetzung ebenfalls Kohlendioxid freigesetzt wird. Es wird daher empfohlen, dass der Anteil des Porosierungsmittels bei 40 Ma.-% oder weniger liegen sollte, vorzugsweise Anteil von 30 Ma.-% oder weniger, insbesondere in einem Anteil von 20 Ma.-% oder weniger, bezogen auf die Ziegelrohmasse.

Ferner kann - wie weiter oben bereits ausgeführt - ein Kalk- oder Karbonat-Anteil in der Ziegelrohmasse bei erhöhten Temperaturen Konlendioxid abspalten, wobei durch einen gewissen Bläheffekt ebenfalls Poren gebildet werden. Da dieser Effekt bei der vorliegenden Erfindung jedoch so weit als möglich unterbunden werden soll, kann das plastisch verformbare Ziegelrohmaterial einen Kalk- oder Karbonat-Anteil zwischen 2 und 35 Ma.-% aufweisen, vorzugsweise zwischen 3 und 33 Ma.-%, insbesondere zwischen 5 und 30 Ma.-%, jeweils bezogen auf die Masse des plastisch verformbaren Ziegelrohmaterials. Der ursprüngliche Kalk- oder Karbonat-Anteil im Ziegelrohmaterial ist inhaltlich gleichbedeutend oder korreliert häufig mit dem Anteil an Calcit und Dolomit, also den TIC-Wert des ungebrannten Ziegelrohlings. Dieser Wert ließe sich reduzieren durch einen Übergang von Mergel oder Tonmergel hin zu Mergelton oder mergeligem Ton. Allerdings sind für eine solche Auswahl des Ausgangs-Rohstoff-Materials oftmals finanzielle Grenzen gesetzt, da reines Tonmineral im Allgemeinen teurer ist als ein mit Kalk versetztes Tonmineral.

Die restlichen Bestandteile des Ziegelrohmaterials, bspw. Pyrit und/oder Gips, sollten insgesamt bei einem Anteil unterhalb von 15 Ma.-% liegen, vorzugsweise unterhalb von 10 Ma.-%, insbesondere unterhalb von 5 Ma.-%, da diese weder einen vorteilhaften Einfluss auf den Brennvorgang haben noch dem fertigen Bauprodukt besondere Eigenschaften verleihen.

Ferner empfiehlt die Erfindung, dass die Ziegelrohmasse für das gebrauchsfertige Bauprodukt das Tonmineral in Form eines Kristallwasser aufweisenden Hydrats aufweist, da ein Tonmineral in jener Form plastisch und optimal formbar ist.

Das Ziegelrohmaterial sollte weder vor noch während oder nach dem Formgebungsschritt geschäumt werden, vorzugsweise weder auf mechanischem Wege geschäumt wird noch durch Einleitung von Druckluft, noch durch Zugabe eines Schäumungsmittels in das Ziegelrohmaterial. Durch einen Schäumungsprozess könnte die mechanische Stabilität des fertigen Ziegelscherbens reduziert oder beeinträchtigt werden.

Bevorzugt werden die Ziegelrohlinge aus der Ziegelrohmasse durch Extrudieren geformt. Dabei wird aus der plastischen Ziegelrohmasse zunächst ein endloser Strang extrudiert mit dem Querschnitt eines fertigen Ziegelscherbens, und sodann werden daraus in gleichmäßigen Abständen einzelne Ziegel abgeschnitten, die sodann getrocknet werden, vorzugsweise bis sie derart fest sind, dass sie für den anschließenden Brennvorgang aufeinander gestapelt werden können.

Das eigentliche Brennen findet sodann in einem Ofen statt. Bevorzugt durchlaufen die geformten Ziegelrohlinge dabei einen Tunnelofen mit einer Aufheizzone, einer Brennzone und einer Abkühlzone. Naturgemäß ist dabei die Temperatur innerhalb der Brennzone am heißesten.

Dabei sollte die maximale Temperatur in dem Brenn- oder Tunnelofen, insbesondere in dessen Brennzone, unterhalb von 850 °C liegen, vorzugsweise bei einer Temperatur unterhalb von 800 °C, insbesondere bei einer Temperatur von weniger als 750 °C, weiter bevorzugt sogar bei einer Temperatur von weniger als 700 °C. Durch eine solche Reduzierung der Brenntemperatur kann vermieden werden, dass die in dem Ziegelrohmaterial enthaltenen Karbonate wie bspw. Kalzit oder Dolomit zersetzt werden und dabei das klimaschädliche $CO_2$ abspalten.

Andererseits wird empfohlen, dass die maximale Temperatur in dem Brenn- oder Tunnelofen, insbesondere in dessen Brennzone, oberhalb von 450 °C liegt, beispielsweise bei einer Temperatur von 500 °C oder darüber, vorzugsweise bei einer Temperatur oberhalb von 550 °C, insbesondere bei einer Temperatur von mehr als 600 °C, oder gar oberhalb einer Temperatur von 650 °C. Dadurch ist gewährleistet, dass das Sintern stattfindet und der dabei gebildete Scherben bei einer Wasserzugabe nicht mehr in den ursprünglich plastischen Zustand des Ziegelrohmaterials zurückkehrt.

Weitere Vorteile ergeben sich dadurch, dass die Länge l der Brennzone in dem Brenn- oder Tunnelofen, bezogen auf die Transportgeschwindigkeit v Brenn- oder Tunnelofen, also die Verweildauer T eines Ziegelformlings in der eigentlichen Brennzone, größer ist als 1 Stunde:

$$T = l / v \geq 1 \text{ Stunde},$$

und/oder größer ist als 2 Stunden:

$$T = l / v \geq 2 \text{ Stunden},$$

und/oder größer ist als 3 Stunden:

$$T = l / v \geq 3 \text{ Stunden},$$

wobei der Ziegelformling während der Verweildauer T aus der zunächst plastischen Ziegelrohmasse getrocknet und sodann gebrannt wird und anschließend nicht mehr durch Wasserzugabe in den ursprünglichen plastischen Zustand des Materials überführbar ist. Während dieser Dauer hat das Tonmineral ausreichend Gelegenheit, weitgehend oder vollständig über die gesamte Tiefe des Ziegelrohlings zu sintern, so dass dieser vollständig durch gebrannt wird.

Insbesondere braucht ein erfindungsgemäß gebrannter Scherben nach dem Brennen und dem anschließenden Abkühlen in- und außerhalb des Ofens keinerlei weiterer thermischer Behandlung mehr unterzogen werden, sondern ist - ggf. bei Bedarf nach Verfüllen von vorhandenen Lochungen - unmittelbar gebrauchsfertig.

Die Erfindung lässt sich dahingehend weiterbilden, dass der Ziegelformling beim Formgebungsschritt, insbesondere beim Extrudieren, wenigstens eine Lochung erhält, die während des Brennens zum gebrauchsfertigen Bauprodukt erhalten bleibt. Da solche Lochungen die Matrix des Ziegelsteins unterbrechen, wird auch der Wärmetransport durch Wärmeleitung reduziert und die thermische Isolationsfähigkeit eines solchen Ziegelsteins erhöht. Bevorzugt verlaufen solche Lochungen in vertikaler Richtung, und die betreffenden Ziegelsteine werden mitunter auch als Hochlochziegel bezeichnet.

Um andererseits die statische Belastbarkeit des gebrauchsfertigen Ziegelsteins nicht zu stark zu beeinträchtigen, sollte der Volumenanteil aller Lochungen eines Ziegelsteins, bezogen auf das durch die Außenabmessungen des gebrauchsfertigen Mauersteins umgrenzte Volumen, bei weniger als 70 Vol.-% liegen, vorzugsweise bei einem Volumenanteil der Lochung von weniger als 60 Vol.-%, insbesondere bei einem Volumenanteil der Lochung von weniger als 50 Vol.%. Statisch noch besser ist es, wenn der gesamte, solchermaßen bestimmte Volumenanteil aller Lochungen eines Ziegelsteins bei 40 Vol.-% oder darunter liegt, insbesondere bei 30 Vol.-% oder darunter.

Nach dem Brennvorgang, insbesondere nach dem Durchlaufen eines Brenn- oder Tunnelofens, kann in die vorhandene Lochung des Bauprodukts wenigstens ein organisches und/oder anorganisches Füllmaterial eingefüllt oder integriert werden.

Durch das erfindungsgemäße Brenn-Verfahren sollte der gebrauchsfertige Ziegelscherben eine Porosität erhalten, die bei 50 % oder darunter liegt, vorzugsweise bei 40 % oder darunter, insbesondere bei 30 % oder darunter.

Andererseits empfiehlt die Erfindung, dass der Volumenanteil aller Lochungen eines Ziegelsteins, bezogen auf das durch die Außenabmessungen des gebrauchsfertigen Mauersteins umgrenzte Volumen, bei 10 Vol.-% oder mehr liegt, beispielsweise bei einem Volumenanteil der Lochung von 15 Vol.-% oder mehr, vorzugsweise bei einem Volumenanteil der Lochung von 20 Vol.% oder mehr, insbesondere bei einem Volumenanteil der Lochung von 25 Vol.% oder mehr.

Durch das erfindungsgemäße Brenn-Verfahren erhält der gebrauchsfertige Ziegelscherben eine Porosität, die bei 5 % oder mehr liegt, beispielsweise bei 10 % oder darüber, vorzugsweise bei 20 % oder darüber, insbesondere bei 25 % oder darüber.

Die Erfindung empfiehlt, dass das gebrauchsfertige, feste Bauprodukt bei dem Brennen eine Scherben-Rohdichte $\rho_{Sch}$ von mehr als 0,4 kg/dm$^3$ erhält, vorzugsweise eine Scherben-Rohdichte $\rho_{Sch}$ von mehr als 0,5 kg/dm$^3$, insbesondere eine Scherben-Rohdichte $\rho_{Sch}$ von mehr als 0,6 kg/dm$^3$. Dabei soll der Begriff Scherben-Rohdichte $\rho_{Sch}$ im Gegensatz zur Ziegel-Rohdichte $\rho_Z$ wie folgt verstanden werden:

Die Ziegel-Rohdichte $\rho_Z$ ist die Masse des gebrannten und getrockneten Ziegels, bezogen auf das äußere Volumen einschließlich etwa vorhandener Lochkanäle, Grifflöcher und Mörteltaschen.

Demgegenüber ist die Scherbenrohdichte $\rho_{Sch}$ die Masse des gebrannten und getrockneten Ziegels, bezogen auf das Scherbenvolumen, d.h., das äußeres Volumen des Ziegels abzüglich des Volumens der Lochkanäle, Grifflöcher und Mörteltaschen. Das für die Scherbenrohdichte $\rho_{Sch}$ relevante Volumen $V_{Sch}$ kann bspw. durch vollständiges Eintauchen des fertig gebrannten, abgekühlten und getrockneten Ziegels in Wasser anhand des dabei verdrängten Wasservolumens $V = V_{Sch}$ ermittelt werden.

In Ergänzung dazu ist weiterhin vorgesehen, dass das gebrauchsfertige, feste Bauprodukt bei dem Brennen eine Scherben-Rohdichte $\rho_{Sch}$ von 2,2 kg/dm$^3$ oder weniger erhält, vorzugsweise eine Scherben-Rohdichte $\rho_{Sch}$ von weniger als 2,0 kg/dm$^3$, insbesondere eine Scherben-Rohdichte von weniger als 1,8 kg/dm$^3$.

Um bei der Ziegelherstellung die Karbonat-Zersetzung zum Großteil zu verhindern. sollten die Ziegel unterhalb der Temperatur der Karbonat-Zersetzung gebrannt werden. Bevorzugt soll hierbei eine Garbrandtemperatur von < 700 °C gewählt werden. Bei einer Garbrandtemperatur > 700 °C würden freien Metalloxide entstehen, welche zu einer Schädigung des Scherbens führen könnten.

Garbrandtemperaturen < 700 °C können durch biogene Energieträger erzielt werden. Hierfür können der Betriebsmischung Ausbrennstoffe (Porosierungsmittel) zugesetzt werden. Darüber hinaus kann der Brand durch Biogas (z.B. Holzgas) unterstützt werden. Als Ergebnis wäre eine klimaneutrale Herstellung der Ziegel möglich.

Im Anschluss an das erfindungsgemäße Brenn-Verfahren liegt der TIC-Gehalt des gebrannten, gebrauchsfertigen Bauproduktes zwischen 0,3 Ma.-% und 5 Ma.-%, vorzugsweise zwischen 0,4 Ma.-% und 4 Ma.-%, insbesondere zwischen 0,5 Ma.-% und 3 Ma.-%. Damit ist erreicht, dass das enthaltene Karbonat nicht oder nur zu einem Teil zersetzt worden ist, so dass wenig oder gar kein ursprünglich mineralisch gespeichertes $CO_2$ entwichen ist.

Einschränkend muss erwähnt werden, dass dieses Produktionsverfahren nur für Mauerziegel geeignet ist, welche keiner Beanspruchung durch kontinuierliche Witterungseinflüsse unterliegen. Für Vormauerziegel, Klinker und Dachziegel ist ein Brand bei reduzierten Garbrandtemperaturen nicht geeignet.

Eine weitere Einschränkung des beabsichtigten Produktionsverfahrens bei reduzierten Garbrandtemperaturen und des daraus resultierenden Bauproduktes ist, dass sich die Druckfestigkeit reduziert, weshalb das Bauprodukt vor der Anwendung auf Eignung zu prüfen ist.

Das neue Bauprodukt stellt eine Alternative zum herkömmlich gebrannten Ziegel dar, mit deutlich reduzierten $CO_2$-Emissionswerten. Es bietet eine Ergänzung zu den Bauprodukten Ziegel und Lehmstein.

Während der TIC-Gehalt des gebrannten, gebrauchsfertigen Bauproduktes zwischen 0,3 Ma.-% und 5 Ma.-% liegt, vorzugsweise zwischen 0,4 Ma.-% und 4 Ma.-%, insbesondere zwischen 0,5 Ma.-% und 3 Ma.-% liegt, ist der TOC-Gehalt durch Ausbrennen sämtlicher Füllstoffe auf TOC = 0 Ma.-% gesunken.

Allerdings kann dieser Wert durch Verfüllen eventuell vorhandener Lochungen wieder auf TOC > 0 Ma.-% angehoben werden, insbesondere auf TOC > TIC. Hierzu können organische Bestandteile wie bspw. Zellulose in die Lochung(en) eingebracht werden, bspw. in Form eines mit einem Bindemittel vermischten Pulvers. Auf diesem Wege lassen sich bei Bedarf TOC-Werte des gebrauchsfertigen Baumaterials von TOC ≥ 2 Ma.-% erreichen, oder von TOC ≥ 4 Ma.-%, insbesondere auch von TOC ≥ 8 Ma.-%.

In die vorhandene Lochung des Bauprodukts kann je nach Bedarf organisches und/oder anorganisches Füllmaterial integriert werden, um die Eigenschaften des fertigen Bauproduktes an vorgegebene Anforderungen anzupassen.

Gemäß dem folgenden Beispiel lassen sich die Anteile der verschiedenen Fraktionen an einer erfindungsgemäßen Zusammensetzung der plastisch verformbaren Ziegelrohmasse wie folgt darstellen:
Der Anteil des Quarzes in der plastisch verformbaren Ziegelrohmasse kann bei 15 bis 70 Ma.-% liegen, sollte aber ggf. zumindest teilweise durch Ziegelmehl (bspw. in einem Anteil von bis zu 30 Ma.-%) ersetzt werden, um einen möglichst niedrigen Sinterpunkt zu erhalten.

Der Anteil des Kaolinits oder anderer, ggf. aller Tonmineralien in der plastisch verformbaren Ziegelrohmasse liegt bevorzugt zwischen 10 und 50 Ma.-%.

Die meist ebenfalls vorhandene Karbonat-Fraktion kann in der plastisch verformbaren Ziegelrohmasse in einem Anteil von 2 - 35 Ma.-% vorliegen.

Feldspat liegt oftmals in einem Anteil von bis zu 25 Ma.-% vor.

Porosierungsmittel, z.B. in Form von Papierfangstoff, können in einem Anteil von bis zu 30 Ma.-% untergemischt sein.

Wasser wird in derjenigen Menge hinzugegeben, welche erforderlich ist, um eine für die Formung der Ziegelrohlinge geeignete Konsistenz bzw. Plastizität zu erzeugen.

Dabei dienen Ziegelmehl und Quarz zur Abmagerung, Feldspat dient als Schmelzphasenbildner und damit zur Herabsetzung des Sinterpunktes, während der Papierfangstoff einerseits als Porenbildner wirkt und andererseits der Energieerzeugung unmittelbar innerhalb des geformten Ziegelrohlings dient.

Aus einer daraus angemischten, plastisch verformbaren Ziegelrohmasse wird zunächst ein endloser Strang extrudiert mit dem Querschnitt des gewünschten, fertigen Bauproduktes, wobei ein Schwinden während des Brennens mit einkalkuliert werden sollte; dieser Strang wird sodann in einzelne Ziegelrohlinge geschnitten, deren Abmessungen um den zu erwartenden Schwund größer sind als das gewünschte, gebrauchsfertige Bauprodukt.

Sodann werden diese Ziegelformlinge getrocknet, damit sie anschließend zum Brennen auf Ofentransportwagen übereinander gestapelt werden können.

Ist dies geschehen, werden die Ofentransportwagen nacheinander in einen Tunnelofen geschoben und dort zunächst in der Aufheizzone auf eine Temperatur von ca. 550 bis 600 °C aufgeheizt.

Sodann werden sie von dort nach mehreren Stunden des Aufheizens allmählich weiter geschoben in die Brennzone, wo eine Temperatur von 600 °C bis 750 °C herrscht, so dass nur ein Schwachbrand durchgeführt wird, der nicht zu einem vollständigen Sintern führt. Dennoch wird der Sintervorgang eingeleitet und mit dem Ablauf desselben verliert der Ziegelformling endgültig seine Plastizität, d.h., bei einer späteren Wasserzugabe (nach dem Verlassen des Ofens) würde der gebrannte Scherben nicht mehr in seinen ursprünglich plastischen Zustand zurückkehren.

Nachdem die Formlinge solchermaßen für mehrere Stunden innerhalb der Brennzone gebrannt und damit gesintert wurden, gelangen sie durch Voranschieben der Transportwagen als nächstes in die Abkühlzone und werden dort ganz allmählich, d.h., über mehrere Stunden hinweg, abgekühlt bis auf eine Temperatur von weniger als 100 °C. Schließlich verlassen die fertig gebrannten und abgekühlten Scherben den Tunnelofen und können zwischengelagert und ggf. in vorhandenen Lochungen verfüllt werden, bspw. mit zumindest teilweise organischem Material. Schließlich können die gebrauchsfertigen Bauprodukte ausgeliefert werden.

Da die Temperatur in dem Tunnelofen dabei niemals eine Schwelle von 700 °C oder 750 °C überstiegen hat, ist der TIC-Gehalt der gebrauchsfertigen Ziegel vergleichsweise hoch, und es ist nur wenig $CO_2$ in die Atmosphäre entwichen. Darüber hinaus wird durch die Reduzierung der Brenntemperatur die für das Brennen benötigte Energie deutlich reduziert, so dass die normalerweise zum Aufheizen des Tunnelofens benötigten fossilen Energieträger eingespart werden und auch deshalb obendrein noch weniger $CO_2$ in die Atmosphäre abgegeben wird.

Da bei dem Brennen das Tonmineral jedenfalls an allen der Außenseite des Ziegelformlings sowie ggf. integrierten Hohlräumen des Ziegelformlings zugewandten Oberflächen versintert wird, kann das fertige Bauprodukt seine durch die Formgebung des Ziegelrohlings vorgegebene und durch das Brennen endgültig fixierte Form nicht mehr verlieren, selbst wenn im Inneren des gebrauchsfertigen Bauproduktes durch den Schwachbrand der Sintervorgang nicht an allen Stellen vollständig abgeschlossen sein sollte.

**Patentansprüche**

1. Keramisches Bauprodukt zur Herstellung einer Wand und/oder zur Verkleidung einer Gebäudehülle, bspw. in Form eines Mauersteins oder eines Fassadenelements, insbesondere eines vorzugsweise in einer oxidierenden Atmosphäre gebrannten Mauerziegels, wobei das Bauprodukt unter ausschließlichem Einsatz von festen und flüssigen Bestandteilen hergestellt ist, **dadurch gekennzeichnet, dass** das gebrannte Bauprodukt

   a) einen TIC-Gehalt (Total Inorganic Carbon) von mehr als 0,3 Ma.-% aufweist, und
   b) durch Wasserzugabe nicht in einen plastischen Zustand des Materials überführbar ist.

2. Bauprodukt nach Anspruch 1, **dadurch gekennzeichnet, dass** der TIC-Gehalt des gebrannten, gebrauchsfertigen Bauproduktes zwischen 0,3 Ma.-% und 5 Ma.-% liegt, vorzugsweise zwischen 0,4 Ma.-% und 4 Ma.-%, insbesondere zwischen 0,5 Ma.-% und 3 Ma.-%.

3. Bauprodukt nach Anspruch 1 oder 2, **dadurch gekennzeichnet, dass** das gebrauchsfertige Bauprodukt aus einer plastisch verformbaren Ziegelrohmasse hergestellt ist, die ein Tonmineral enthalten kann, vorzugsweise mergeligen Ton, Mergelton, Tonmergel und/oder Mergel, insbesondere wobei die Ziegelrohmasse für das gebrauchsfertige Bauprodukt das Tonmineral in Form eines Kristallwasser enthaltenden Hydrats aufweist.

4. Bauprodukt nach einem der vorhergehenden Ansprüche, **dadurch gekennzeichnet, dass** das gebrauchsfertige Bauprodukt aus einem Ziegelrohling hergestellt ist, der aus einem plastisch verformbaren Ziegelrohmaterial geformt, getrocknet und gebrannt ist, wobei das plastisch verformbare Ziegelrohmaterial

   a) einen Kalk- oder Karbonat-Anteil zwischen 2 und 35 Ma.-% aufweist, insbesondere einen Kalk- oder Karbonat-Anteil zwischen 3 und 30 Ma.- %, und/oder
   b) Quarz in einem Anteil von 70 Ma.-% oder weniger enthält, vorzugsweise in einem Anteil von 60 Ma.-% oder weniger, insbesondere in einem Anteil von 50 Ma.-% oder weniger, und/oder
   c) wenigstens ein Porosierungsmittel aufweist, bspw. in einem Anteil von 30 Ma.-% oder weniger, vorzugsweise Anteil von 20 Ma.-% oder weniger, insbesondere in einem Anteil von 10 Ma.-% oder weniger, bezogen auf die Ziegelrohmasse;
   d) wobei die weiteren Bestandteile des Ziegelrohmaterials, bspw. Feldspat, Glimmer, Pyrit und/oder Gips, insgesamt unterhalb von 15 Ma.-% liegen, vorzugsweise unterhalb von 10 Ma.-%, insbesondere unterhalb von 5 Ma.-%.

5. Bauprodukt nach einem der vorhergehenden Ansprüche, **dadurch gekennzeichnet, dass** das gebrauchsfertige Bauprodukt

   a) in einem Ofen gebrannt ist, und/oder
   b) bei einer Temperatur von weniger als 850 °C, gebrannt ist, vorzugsweise bei einer Temperatur von weniger als 750 °C, insbesondere bei einer Temperatur von weniger als 700 °C, und/oder
   c) bei einer Temperatur von 450 °C oder darüber gebrannt ist, vorzugsweise bei einer Temperatur von 550 °C oder darüber, insbesondere bei einer Temperatur von 650 °C oder darüber.

6. Bauprodukt nach einem der vorhergehenden Ansprüche, **dadurch gekennzeichnet, dass** das gebrauchsfertige Bauprodukt

   a) aus einer zunächst plastischen Ziegelrohmasse hergestellt ist, welche getrocknet und gebrannt wird und anschließend nicht mehr durch Wasserzugabe in den ursprünglichen plastischen Zustand des Materials überführbar ist, und/oder
   b) aus einem Ziegelrohling hergestellt ist, der aus einer plastisch verformbaren Ziegelrohmasse geformt, getrocknet und gebrannt ist, wobei der Ziegelrohling aus einem durch Extrudieren der plastisch verformbaren Ziegelrohmasse gebildeten Strang ausgeschnitten ist.

7. Bauprodukt nach einem der vorhergehenden Ansprüche, **dadurch gekennzeichnet, dass** das gebrauchsfertige Bauprodukt ein festes Baumaterial mit wenigstens einer Lochung ist, beispielsweise wobei der Volumenanteil der Lochung, bezogen auf das durch die Außenabmessungen des Mauersteins umgrenzte Volumen, weniger als 70 Vol.-% beträgt, vorzugsweise weniger als 60 Vol.-%, insbesondere weniger als 50 Vol.%, und wobei gegebenenfalls in die vorhandene Lochung des bereits gebrannten Bauprodukts organisches und/oder anorganisches Füllmaterial integriert ist.

8. Bauprodukt nach einem der vorhergehenden Ansprüche, **dadurch gekennzeichnet, dass** die offene Porosität des gebrannten, gebrauchsfertigen Bauproduktes bei 50 % oder darunter liegt, vorzugsweise bei 40 % oder darunter, insbesondere bei 30 % oder darunter.

9. Bauprodukt nach einem der vorhergehenden Ansprüche, **dadurch gekennzeichnet, dass** das gebrannte, gebrauchsfertige Bauprodukt ein festes Baumaterial ist

a) mit einer Scherben-Rohdichte von weniger als 2,2 kg/dm$^3$, vorzugsweise mit einer Scherben-Rohdichte von weniger als 2,0 kg/dm$^3$, insbesondere mit einer Scherben-Rohdichte von weniger als 1,8 kg/dm$^3$, und/oder
b) mit einer Scherben-Rohdichte von mehr als 0,4 kg/dm$^3$, vorzugsweise mit einer Scherben-Rohdichte von mehr als 0,5 kg/dm$^3$, insbesondere mit einer Scherben-Rohdichte von mehr als 0,6 kg/dm$^3$.

10. Verfahren zur Herstellung eines keramischen Bauproduktes für die Herstellung einer Wand und/oder zur Verkleidung einer Gebäudehülle, bspw. in Form eines Mauersteins oder eines Fassadenelements, insbesondere eines Mauerziegels, wobei das keramische Bauprodukt aus einer unter ausschließlichem Einsatz von festen und flüssigen Bestandteilen hergestellten Ziegelrohmasse in einem plastischen Zustand geformt, getrocknet und sodann in einem Brennofen vorzugsweise unter einer oxidierenden Atmosphäre gebrannt wird, **dadurch gekennzeichnet, dass** der Brennvorgang derart durchgeführt wird, dass das gebrannte Bauprodukt

b) einen TIC-Gehalt (Total Inorganic Carbon) von mehr als 0,3 Ma.-% aufweist, und
b) durch Wasserzugabe nicht in einen plastischen Zustand des Materials überführbar ist.

11. Verfahren nach Anspruch 10, **dadurch gekennzeichnet, dass** der Ziegelrohling für das Bauprodukt aus einem plastisch verformbaren Ziegelrohmaterial geformt wird, der mergeligen Ton, Mergelton, Tonmergel und/oder Mergel aufweist, insbesondere als Hauptbestandteil.

12. Verfahren nach einem der Ansprüche 10 oder 11, **dadurch gekennzeichnet, dass** der Ziegelrohling für das Bauprodukt aus einer plastisch verformbaren Ziegelrohmasse geformt wird, wobei die Ziegelrohmasse

a) einen Kalk- oder Karbonat-Anteil zwischen 2 und 35 Ma.-% aufweist, insbesondere zwischen 3 und 30 Ma.-%, jeweils bezogen auf die Masse des plastisch verformbaren Ziegelrohmaterials, und/oder
b) Quarz in einem Anteil von weniger als 70 Ma.-% enthält, vorzugsweise in einem Anteil von 60 Ma.-% oder weniger, insbesondere in einem Anteil von 50 Ma.-% oder weniger, jeweils bezogen auf die Masse des plastisch verformbaren Ziegelrohmaterials.

13. Verfahren nach einem der Ansprüche 10 bis 12, **dadurch gekennzeichnet, dass** der Ziegelrohling für das Bauprodukt aus einer plastisch verformbaren Ziegelrohmasse geformt wird, welchem wenigstens ein Porosierungsmittel zugesetzt ist, um die Porosität des gebrauchsfertigen Ziegels zu steigern, wobei der Anteil des Prosierungsmittels

a) 1 Ma.-% oder mehr beträgt, vorzugsweise 2 Ma.-% oder mehr, insbesondere 5 Ma.-% oder mehr, bezogen auf die Ziegelrohmasse, und/oder
b) 30 Ma.-% oder weniger beträgt, vorzugsweise 20 Ma.-% oder weniger, insbesondere 10 Ma.-% oder weniger, bezogen auf die Ziegelrohmasse.

14. Verfahren nach einem der Ansprüche 10 bis 13, **dadurch gekennzeichnet, dass** der Ziegelrohling für das Bauprodukt aus einer plastisch verformbaren Ziegelrohmasse geformt wird, wobei die weiteren Bestandteile der Ziegelrohmasse, bspw. Feldspat, Glimmer, Pyrit und/oder Gips, insgesamt unterhalb von 15 Ma.-% liegen, vorzugsweise unterhalb von 10 Ma.-%, insbesondere unterhalb von 5 Ma.-%.

15. Verfahren nach einem der Ansprüche 10 bis 14, **dadurch gekennzeichnet, dass**

a) die Ziegelrohmasse weder vor noch während oder nach dem Formgebungsschritt geschäumt wird, vorzugsweise weder auf mechanischem Wege geschäumt wird noch durch Einleitung von Druckluft, noch durch Zugabe eines Schäumungsmittels in das Ziegelrohmaterial, und/oder
b) aus der Ziegelrohmasse durch Extrudieren ein Strang geformt wird, aus welchem sodann durch Schneiden die einzelnen Ziegelrohlinge geformt werden.

16. Verfahren nach einem der Ansprüche 10 bis 15, **dadurch gekennzeichnet, dass** die geformten Ziegelrohlinge zum Brennen einen Brennofen durchlaufen, vorzugsweise einen Tunnelofen mit einer Aufheizzone, einer Brennzone und einer Abkühlzone, vorzugsweise wobei die maximale Temperatur in dem Brenn- oder Tunnelofen, insbesondere in dessen Brennzone,

   a) unterhalb von 850 °C liegt, vorzugsweise unterhalb von 750 °C, insbesondere bei weniger als 700 °C, und/oder
   b) oberhalb von 450 °C liegt, vorzugsweise oberhalb von 550 °C, insbesondere bei mehr als 650 °C.

17. Verfahren nach einem der Ansprüche 10 bis 16, **dadurch gekennzeichnet, dass**

   a) das fertig gebrannte Bauprodukt nach dem Brennen und Abkühlen bzw. nach dem Verlassen des Ofens keiner weiteren thermischen Behandlung mehr unterzogen wird, und/oder
   b) dass nach dem Brennen der TIC-Gehalt des gebrannten, gebrauchsfertigen Bauproduktes zwischen 0,3 Ma.-% und 5 Ma.-% liegt, vorzugsweise zwischen 0,4 Ma.-% und 4 Ma.-%, insbesondere zwischen 0,5 Ma.-% und 3 Ma.-%.

18. Verfahren nach einem der Ansprüche 10 bis 17, **dadurch gekennzeichnet, dass** der Ziegelformling beim Formgebungsschritt, insbesondere beim Extrudieren, wenigstens eine Lochung erhält, die während des Brennens zum gebrauchsfertigen Bauprodukt erhalten bleibt, vorzugsweise wobei der Volumenanteil der Lochung, bezogen auf das durch die Außenabmessungen des gebrauchsfertigen Mauersteins umgrenzte Volumen, bei weniger als 70 Vol.-% liegt, beispielsweise bei weniger als 60 Vol.-%, gegebenenfalls bei weniger als 50 Vol.%, vorzugsweise wobei nach dem Brennvorgang, insbesondere nach dem Durchlaufen eines Brenn- oder Tunnelofens, in die vorhandene Lochung des Bauprodukts wenigstens ein organisches und/oder anorganisches Füllmaterial eingefüllt oder integriert wird.

**EP 4 700 001 A1**

Europäisches Patentamt
European Patent Office
Office européen des brevets

## EUROPÄISCHER RECHERCHENBERICHT

**Nummer der Anmeldung**

EP 25 19 7413

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2021/191213 A1 (WIENERBERGER AG [AT]) 30. September 2021 (2021-09-30) | 1-6,8-17 | INV. C04B33/04 |
| Y | * das ganze Dokument * ----- | 7,18 | C04B33/13 C04B33/132 |
| X | AT 524 652 A4 (WIENERBERGER AG [AT]) 15. August 2022 (2022-08-15) | 1-3,5,6 | C04B33/16 C04B33/32 |
| A | * das ganze Dokument - siehe insbesonders die Ansprüche, z.B. Anspruch 10 * ----- | 4,7-18 | |
| Y | EP 4 357 547 A1 (CERAM AG [DE]) 24. April 2024 (2024-04-24) * das ganze Dokument * ----- | 7,18 | |

**RECHERCHIERTE SACHGEBIETE (IPC)**

C04B

Der vorliegende Recherchenbericht wurde für alle Patentansprüche erstellt

| Recherchenort | Abschlußdatum der Recherche | Prüfer |
|---|---|---|
| München | 14. Januar 2026 | Munro, Brian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 19 7413

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-01-2026

| Im Recherchenbericht angeführtes Patentdokument | Datum der Veröffentlichung | Mitglied(er) der Patentfamilie | Datum der Veröffentlichung |
|---|---|---|---|
| WO 2021191213 A1 | 30-09-2021 | AT 17374 U1 | 15-02-2022 |
| | | WO 2021191213 A1 | 30-09-2021 |
| AT 524652 A4 | 15-08-2022 | AT 524652 A4 | 15-08-2022 |
| | | EP 4155041 A1 | 29-03-2023 |
| | | ES 3018858 T3 | 19-05-2025 |
| | | HR P20250354 T1 | 06-06-2025 |
| | | HU E070995 T2 | 28-07-2025 |
| | | PL 4155041 T3 | 16-06-2025 |
| | | RS 66745 B1 | 30-05-2025 |
| EP 4357547 A1 | 24-04-2024 | KEINE | |

Für nähere Einzelheiten zu diesem Anhang : siehe Amtsblatt des Europäischen Patentamts, Nr.12/82

EPO FORM P0461